(19) Europäisches Patentamt
European Patent Office
Office européen des brevets

(11) **EP 3 422 615 B1**

(12) **EUROPEAN PATENT SPECIFICATION**

(45) Date of publication and mention
of the grant of the patent:
**25.08.2021 Bulletin 2021/34**

(51) Int Cl.:
*H04J 14/02* *(2006.01)*        *G02B 6/293* *(2006.01)*
*G02B 6/42* *(2006.01)*

(21) Application number: **17178403.6**

(22) Date of filing: **28.06.2017**

(54) **FILTER BLOCK FOR AN N-CHANNEL MULTIPLEXING/DEMULTIPLEXING DEVICE AND OPTICAL WAVELENGTH DIVISION/DEMULTIPLEXING DEVICE**

FILTERBLOCK FÜR EINE N-KANAL-MULTIPLEX-/DEMULTIPLEX-VORRICHTUNG UND OPTISCHE WELLENLÄNGENTEILUNGS-/DEMULTIPLEX-VORRICHTUNG

BLOC FILTRANT POUR UN DISPOSITIF DE MULTIPLEXAGE/DÉMULTIPLEXAGE À CANAL N ET DISPOSITIF OPTIQUE DE RÉPARTITION EN LONGUEUR D'ONDE/DÉMULTIPLEXAGE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**02.01.2019 Bulletin 2019/01**

(73) Proprietor: **HUAWEI TECHNOLOGIES CO., LTD.**
**Shenzhen Guangdong 518129 (CN)**

(72) Inventors:
• **ZAGO, Paolo**
  **80992 Munich (DE)**

• **RAMPULLA, Alberto**
  **80992 Munich (DE)**

(74) Representative: **Roth, Sebastian**
**Mitscherlich PartmbB**
**Patent- und Rechtsanwälte**
**Sonnenstraße 33**
**80331 München (DE)**

(56) References cited:
**WO-A2-02/056077        US-A1- 2002 057 868**
**US-A1- 2002 131 180        US-A1- 2013 343 699**
**US-B1- 9 485 046**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

TECHNICAL FIELD

The present invention relates to a filter block for an N-channel multiplexing/demultiplexing device for receiving or emitting light. The present invention further relates to an optical wavelength division multiplexing/deultiplexing device comprising such a filter block.

BACKGROUND

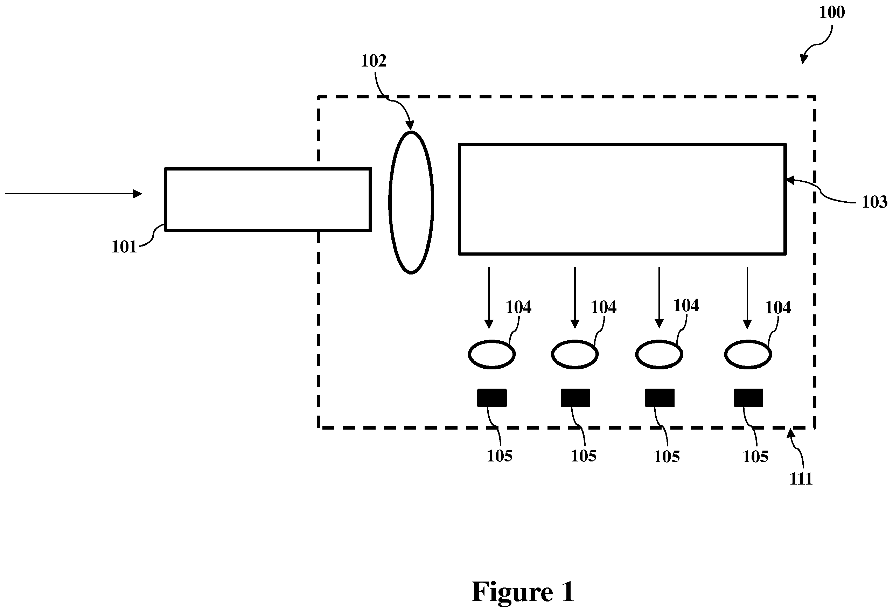

A variety of different kinds of wavelength division multiplexing (WDM) receiver/transmitter is known in the art, which are key components in high-speed optical telecommunication applications. WDM receiver/transmitter typically comprise a fiber receptacle for receiving a fiber optic cable, a collimating lens, a filter block (i.e. a multiplexer/demultiplexer (MUX/DeMUX) with wavelength selective filters), focusing optics and laser sources or photodiode sensors for each channel. FIG. 1 shows such a known WDM receiver comprising photodiodes sensors arranged at a base plate of the WDM receiver.

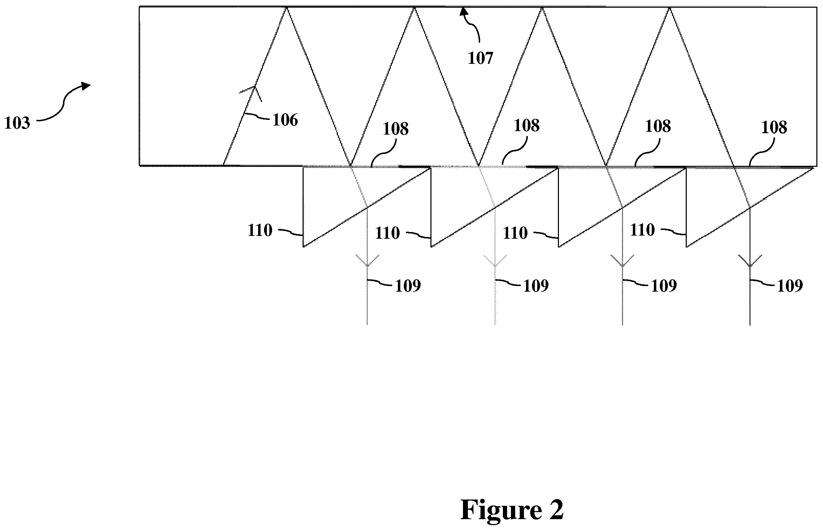

It is a general known difficulty to design a WDM receivers/transmitters in a compact manner. This is in particular challenging for a WDM receiver, since the photodiode sensors usually require a perpendicular light to maximize the collection efficiency and thus, the accuracy of the WDM receiver. In order to simplify the overall device layout into a compact unit, a known DeMUX arrangement typically comprises a planar reflecting surface and several wavelength filters provided at an oppositely arranged planar surface, wherein each filter is transparent for a specific wavelength of the light beam and reflective for the rest of the light beam. Thus, at each filter a specific wavelength of the light beam can be decoupled, thereby providing a respective output light beam of the DeMUX. With decoupled beam it is meant in the present document that the reflected light is transmitted through a filter which is transparent to a defined wavelength. The not-decoupled part of the light beam, i.e. the light component, which is not transmitted through the filter, is reflected back to the reflecting surface and reflected to the next filter, until the entire light beam is divided into respective output light beams. These DeMUX are generally called zigzag blocks or zigzag filters, because of the multiple reflections of the light beam inside the material (e.g. glass) guiding the light beam in a zigzag line between the reflecting surface and the filters. In FIG. 2 such a known zigzag block is shown. As can be taken from FIG. 2, due to the reflections and refractions of light beam, the output light beams are not provided perpendicular to the base plane of a WDM receiver, therefore requiring solutions to "straighten" the output light beams. In the prior art, different solutions have been discussed for "straighten" the output light beams of such zigzag blocks. In FIG. 2, a first solution is shown, namely to place respective prisms or off-axis lenses directly under each filter. A further solution for this issue is to arrange the zigzag block slanted with respect to the base plate of a WDM receiver, thereby "rotating" the output light beams perpendicular to the base plate, wherein also an optical wedge arranged under the filter block can be used in this solution. Finally, it is also known to use further reflectors to provide a perpendicular output light beam.

US 2013/343699 A1 discloses a wavelength division multiplexer/demultiplexer which includes an optical block having a plurality of protrusions positioned at a first side, wherein at least one of the protrusions has a first inclined plane configured to reflect a light propagating in the optical block to a second inclined plane of the protrusion. Another wavelength division multiplexer/demultiplexer includes an optical block having a first side, a plurality of depressions indented from the first side, wherein at least one of the depressions has a first inclined plane configured to reflect a light to a second side and a second inclined plane configured to reflect the light from the second side.

US 9485046 B1 discloses an apparatus including a passive wavelength division multiplexing (WDM) demultiplexer (DeMUX) or a passive WDM multiplexer (MUX), an active photo diode (PD) array or an active laser diode (LD) array, and a compressing device disposed between the passive WDM DeMUX or the passive WDM MUX and the active PD array or the active LD array. The compressing device changes the optical spot pitch of the passive WDM DeMUX or the passive WDM MUX to match the pitch of the active PD array or the active LD array. The compressing device may be a single optical wedge, a first and a second optical wedges, a plurality of optical wedges, or a grating. A compression ratio can be adjusted by changing the incident angle of the incident beam to the compressing device.

US 2002/057868 A1 discloses wavelength division multiplexing (WDM) and demultiplexing of optical signals using optical filters in free space. To minimize dispersion, relatively small angles of incidence are used. To avoid the need for a large package, reflective prisms are utilized to steer the reflected beams to provide a lateral shift in the beam path that ensures that the necessary space is provided between the input/output ports. Devices including a single adjustable filter are disclosed, along with devices having a plurality of filters.

Wo 02/056077 A2 discloses a connector to an optical fiber including a prism, a ferrule and an aspheric lens. The prism includes a triangular wedge element having a first surface, a second surface and a base. The ferrule guides the optical fiber so as to contact the optical fiber with the first surface of the prism. The aspheric lens is integrated on the second surface, the integrated aspheric lens being positioned so that the prism serves to redirect a light beam at an angle relative to an axis of the optical source input through total internal reflection by utilizing the base of the triangle wedge element. The aspheric lens serves to collimate the redirected light beam or focus the light beam before being redirected. This arrangement may, for example, be used within a WDM system to multiplex and de-multiplex several wavelengths of light, using a 'zig-zag' optical path configuration and thin film filters to separate the wavelengths.

US 2002/131180 A1 discloses multiple channel multiplexing/demultiplexing devices that include an optically transparent optical block seated atop an optically transparent beam-directing member. The optical block includes a plurality of wavelength selective elements, a plurality of reflectors, and at least one imaging optical element. The beam-directing member includes a beam folding mirror and focusing lenses. When the devices are used as demultiplexers, a multi-channel beam is directed into the optical block and relayed in a zigzag pattern onto the wavelength selective elements, which separate selected wavelengths from the beam. The separated wavelengths propagate through the beam-directing member and are focused onto optical receptors.

However, by these known solutions either the volume required for the filter block is increased or the complexity of assembly of the WDM receiver is increased due to the further optical elements needed for providing perpendicular output light beams. In addition, these known solutions are not easily adaptable for WDM receivers having more than four output beams, since the required volume increases too much.

### SUMMARY

In view of the above-mentioned problems and disadvantages, the present invention aims to provide a new compact filter block (i.e. a MUX/DeMUX with wavelength selective filters) for an N-channel multiplexing/demultiplexing device for receiving or emitting light and an optical wavelength division multiplexing/demultiplexing device (i.e. a WDM receiver/transmitter) comprising such a compact filter block.

The object of the present invention is achieved by the solution provided in the enclosed independent claims. Advantageous implementations of the present invention are further defined in the dependent claims.

A first aspect of the present invention provides a filter block for an optical N-channel multiplexing/demultiplexing device for receiving or emitting light, wherein the filter block comprises: a plurality of N reflecting surfaces and a plurality of N filters, wherein each reflecting surface is associated to a corresponding N filter so as to reflect a light beam to said associated filter, wherein the plurality of reflecting surfaces and the plurality of N filters are arranged such that a light beam is guided in a zigzag path between the plurality of N reflecting surfaces and the plurality of N filters, and wherein each of said N filters is transparent to a defined wavelength of the light beam and reflective for the rest of the light beam, wherein the plurality of N reflecting surfaces are arranged in a two-dimensional array and the plurality of N filters are oppositely arranged in a two-dimensional array, wherein the reflecting surfaces have respective normal vectors that are not parallel to each other, and the filters have respective normal vectors that are not parallel to each other, and wherein the plurality of N reflecting surfaces and the plurality of N filters are arranged such that output light beams are provided which are perpendicular to a base plate of the optical N-channels multiplexing/demultiplexing device.

In other words, the idea of the present invention is to provide a novel arrangement of the reflecting and filtering surfaces of a filter block by arranging the reflecting surfaces as well as the associated filter surfaces of each of the channels at an adjusted angle with respect to a direction perpendicular to the base plate of a WDM receiver/transmitter at which the block can be arranged. By means of such an angled arrangement of the reflecting and filtering surfaces, it is possible to provide perpendicular output light beams (i.e. decoupled light beams), wherein the perpendicular orientation of the output light beams is a result of the respective reflection of the light beam and the refraction according to Snell's law at the respective filter surface.

This arrangement allows to have output light beams which are perpendicular to a base plate of a WDM receiver without the need of additional components, such as reflecting prisms, wedges or the like. Typical WDM receivers/transmitters have four channels, wherein the present invention also allows providing more than four channels still having a very compact filter block unit. In this respect, it is preferred that each reflecting surface is associated to at least one corresponding filter so as to reflect the light beam to this associated filter, where a respective output light beam is provided and the not-decoupled part of the light beam is reflected to the next reflecting surface. In case of a WDM transmitter, a respective light beam (i.e. input light beam) having a specific wavelength for which the respective filter is transparent is provided by a laser diode arranged at a base plate of the WDM transmitter. Thereby, the respective input light beams of the N channels are guided into the filter block and combined such that the combined light beam can be guided out of the filter block into an optical fiber cable arranged in a fiber receptacle of the WDM transmitter.

A filter block according to the present invention comprises at least two reflecting surfaces and at least two filters, wherein the at least two reflecting surfaces are arranged in different planes and the at least two filters are arranged in different planes. In this respect, a plane is the two-dimensional surface in which the respective reflecting surface or filter is arranged. Depending on the specific geometry of the filter block, it is also possible that a reflecting surface and a filter are arranged in the same plane. Apart from these at least two reflecting surfaces and at least two filters, the filter block may additionally comprise one or more planar reflecting surfaces and one or more filters as described in the prior art and as, for example, shown in FIG. 2.

Moreover, at least four reflecting surfaces are arranged in a two-dimensional array and at least four optically coupled filters are oppositely arranged in a two-dimensional array, wherein the at least four reflecting surfaces have non-parallel normal vectors and the at least four filters have non-parallel normal vectors. By providing non-parallel normal vectors, it is possible to guide the light beam also in a lateral direction, i.e. to provide output light beams or to allow input light beams which are arranged in rectangular arrays (e.g. in a rectangle or a square).

In a further implementation form of the first aspect, the N reflecting surfaces are arranged independently from each other in a three-dimensional space and the N filters are arranged independently from each other in the three-dimensional space. Thereby, the reflecting surfaces and the filters can be independently arranged in the three-dimensional space and the volume of the filter block can be further minimized. For example, the reflecting surfaces and the filters can be arranged in top view in a rectangular array and in side view at different heights. This allows providing a compact filter block design, providing perpendicular output beams and a flexible placement of photodiodes in terms of arrangement and pitch (p). Notably, these results can be obtained through reflection and refraction only, without requiring further optical elements, like prisms, lenses or wedges. However, the present invention does not exclude the use of such further optical elements.

In a further implementation form of the first aspect, the distance p between light beams transmittable from two consecutive filters is

$$p = t \times (\tan(\theta_1 + \theta_2) - \tan(\theta_1 - \theta_2))$$

wherein:

**p**  is the distance (pitch) between two (input or output) light beams transmittable from two consecutive filters;

**t**  is the distance between the i-th reflecting surface and an i-th plane including the at least one corresponding filter; in other words, t is the distance between the point at which the light beam is reflected at the respective reflecting surface and the point at which the light beam hits the respective filter;

$\theta_1$  is an angle of an emitted/received beam with respect to an axis perpendicular to the i-th plane; in other words, $\theta_1$ is an angle at the outside boundary (outside material, e.g. air) between an output/input light beam and a normal vector of the respective filter; and

$\theta_2$  is an angle of the light beam reflected by the i-th reflecting surface with respect to an axis perpendicular to the i-th plane; in other words, $\theta_2$ is an angle at the inside boundary (inside material, e.g. glass or plastic) between the light beam and a normal vector of the respective filter.

By the above formula, combined with Snell's law, a correlation for calculating the pitches and the required arrangements/angles of the reflecting surfaces and filters is provided, by which the required geometry of a respective filter block can be easily derived. Moreover, in more complex arrangements (e.g. more than four channels, arranged in an irregular polygon) also numerical math models (using systems of equations), graphical software with CAD systems or other optical design software can be used to calculate the specific angles and arrangements of the reflecting surfaces and filters.

A second aspect of the present invention provides an optical wavelength division multiplexing/demultiplexing device (i.e. a WDM receiver or transmitter), comprising: at least one filter block according to the first aspect of the invention, a base plate on which optical sensors (in case of a WDM receiver) or laser diodes (in case of a WDM transmitter) are arranged; and wherein the at least two reflecting surfaces and the at least two filters are such arranged that the light beams transmittable through the at least two filters are parallel to a normal vector of the base plane. Consequently, by using a filter block according to the present invention, a very compact WDM receiver/transmitter can be provided.

In an implementation form of the second aspect, between the at least two filters and the optical sensors (e.g. photo diode sensors) or laser diodes no optical elements are arranged, in particular no prisms or wedges.

In a further implementation form of the second aspect, the optical sensors comprise a respective focusing lens for focusing a respective output light beam. Depending on the specific requirements, such focusing lenses may further enhance the collection efficiency and reduce tolerance sensitivity of the WDM receiver.

In a further implementation form of the second aspect, the optical sensors or laser diodes on the base plate are arranged in form of a linear or two-dimensional array, thereby further minimizing the required volume for a WDM receiver/transmitter.

In a further implementation form of the second aspect, the optical sensors or laser diodes are regularly distributed on the base plate. In this respect, regularly distributed means that the distances between two consecutive optical sensors or laser diodes are constant. In case, it is about an array, regularly distributed means that the lines and rows of the array are equally distributed.

In a further implementation form of the second aspect, the optical sensors or laser diodes are irregularly distributed on the base plate, i.e. that all or some distances between two consecutive optical sensors or laser diodes are different. In case, it is about an array that all or some of the distances between the lines or rows of the array are different.

In a further implementation form of the second aspect, the WDM receiver/transmitter comprises a fiber optic cable receptacle configured to receive the end of a fiber optic cable and a collimating lens optically aligned with the fiber optic receptacle and configured to guide the light beam from the fiber optic cable into the filter block. It is further preferred that the filter block, the fiber optic cable receptacle and the collimating lens are formed by means of plastic molding and the N filters are preferably applied by means of coating, wherein the fiber optic cable receptacle and the collimating lens are preferably formed as an integral part.

The N wavelengths being preferably in the range 1260 nm to 1360 nm or 1460 nm to 1620 nm.

It has to be noted that all devices, elements, units and means described in the present application could be implemented in the software or hardware elements or any kind of combination thereof. All steps which are performed by the various entities described in the present application as well as the functionalities described to be performed by the various entities are intended to mean that the respective entity is adapted to or configured to perform the respective steps and functionalities. Even if, in the following description of specific embodiments, a specific functionality or step to be performed by external entities is not reflected in the description of a specific detailed element of that entity which performs that specific step or functionality, it should be clear for a skilled person that these methods and functionalities can be implemented in respective software or hardware elements, or any kind of combination thereof.

## BRIEF DESCRIPTION OF DRAWINGS

The above described aspects and implementation forms of the present invention will be explained in the following description of specific embodiments in relation to the enclosed drawings, in which

FIG. 1 shows a WDM receiver according to the prior art.

FIG. 2 shows the filter block used in the WDM receiver of **FIG.1** in more detail.

FIG. 3 shows a filter block according to a first embodiment of the invention.

FIG. 4 shows a detail of the filter block of **FIG. 2.**

FIG. 5 shows two linear arrangements of the reflecting surfaces and filters of a filter block according to the first embodiment of the invention.

FIG. 6 shows a WDM receiver comprising a filter block shown in **FIG. 3.**

FIG. 7 shows different variations of the filter block according to the first embodiment of the invention.

FIG. 8 shows a filter block according to a second embodiment of the invention.

FIG. 9 shows the arrangement of the reflecting surfaces and filters of the second embodiment of the invention in more detail.

FIG. 10 shows a variation of a filter block according to the second embodiment of the invention.

FIG. 11 shows the relation between the reflecting surfaces and the filters in more detail.

FIG. 12 shows the arrangement of the reflecting surfaces and filters of a variation of the second embodiment comprising six channels.

FIG. 13 shows a top view of the arrangement of the reflecting surfaces and filters of the filter block shown in **FIG. 12.**

FIG. 14 shows two arrangements of the optical sensors or laser diodes arranged at the base plate of a WDM receiver/transmitter.

## DETAILED DESCRIPTION OF EMBODIMENTS

**FIG. 1** shows a known 4-channel WDM receiver 100 comprising: a fiber receptacle 101, a collimating lens 102, a zigzag filter block 103 (i.e. a demultiplexer (De-MUX)), focusing optics 104 and photodiode sensors 105. **FIG. 2** shows the filter block 103 in more detail, in particular the zigzag shaped guiding of an input light beam 106 through the filter block 103.

By means of the fiber receptacle 101, a fiber optic cable (not shown) is connected to the WDM receiver 100, thereby guiding the light beam 106 via the collimating lens 102 into the filter block 103.

As can be seen, for instance in figure 2, the filter block 103 comprises a flat single reflective surface 107 and at the opposite side several filters 108 (e.g. provided by respective coatings). Each of the filters 108 is transparent for a specific wavelength of the light beam 106 such that at a respective filter 108, a respective decoupled light beam 109 (i.e. an output beam 109) can be guided to a focusing optic 104 and a below arranged photodiode sensor 105, i.e. to an output channel of the filter block 103. With decoupled beam it is meant in the present document that the reflected light is transmitted through a filter which is transparent to a defined wavelength. Whereby, each filter 108 reflects the not decoupled parts of the light beam 106 back to the reflecting surface 107, which in turn reflects the light beam 106 to the next filter 108, until the light beam 106 is completely decoupled.

As can be taken from **FIG. 2,** the decoupled light beams 109 are not decoupled at the filters 108 in a perpendicular manner with respect to a base plate 111 of the WDM receiver 100 at which the focusing optics 104 and the photodiode sensors 105 are arranged. This is because the light beam 106 is not directed in a perpendicular manner onto the filters 107 and due to a refraction effect according to the Snell's law when a light beam passes two different media, here the material of the filter block 103 (e.g. glass or plastic) and the surrounding material (e.g. air or a filler gas). However, in order to maximize the collection efficiency of the photodiode sensors 105 such a perpendicular light beam is desired. Therefore, in case such a known filter block 103 is used in a WDM receiver, further measures are required for redirecting/straightening the decoupled light beams 109. One possible solution for redirecting/straightening the decoupled light beams 109 is to arrange respective prisms 110 below the filters 108 as shown in **FIG. 2.** Other measures for redirecting/straightening the decoupled light beams 109 are, for example, to tilt the entire filter block and/or to use optical wedges or other optical elements. However, these known solutions generally increase the volume of the filter block or the WDM receiver/transmitter and/or require a comparable complex assembly steps.

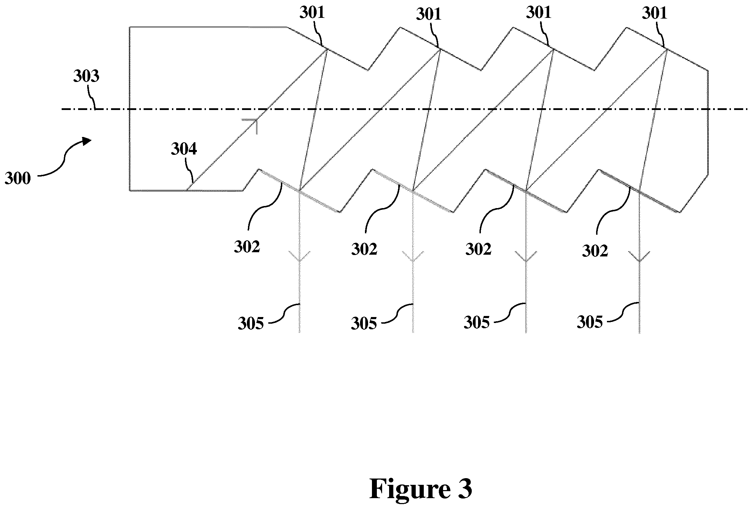

**FIG. 3** shows a 4-channel filter block 300 according to a first embodiment of the invention. The filter block 300 comprises several reflecting surfaces 301 and filters 302.

The reflecting surfaces 301 are arranged in different planes, wherein a plane is the two-dimensional surface in which the respective reflecting surface 301 is arranged. Moreover, the respective filters 302 are also arranged in different planes, wherein depending on the specific geometry of the filter block 300, it is possible that a reflecting surface 301 and a filter 302 are arranged in the same plane. As can be taken from **FIG. 3,** the reflecting surfaces 301 are arranged with an offset from each other and the filters 302 are arranged with an offset from each other, wherein both offsets resulting from the arrangement in different planes. Moreover, the reflecting surfaces 301 and the filters 302 are distributed linearly along a longitudinal axis 303 of the filter block 300. With respect to the longitudinal axis 303, the reflecting surfaces 301 and filters 302 are tilted. In the shown embodiment, the reflecting surfaces 301 have parallel normal vectors and the filters 302 have parallel normal vectors, i.e. the reflecting surfaces 301 and the filters 302 are arranged in parallel planes, respectively. In the embodiment, both the reflecting surfaces 301 and the filters 302 are arranged parallel. As a result, the cross-section of the filter block 300 has a saw teeth shape.

As shown in **FIG. 3,** a light beam 304 can be guided into the filter block 300 in such a way that it its directed to a first one of the reflecting surfaces 301 which in turn reflects the light beam 304 to a first one of the filters 302 (i.e. to a filter 302 associated to the respective reflecting surface 301). Also here, the filters 302 of the filter block 300 are each transparent for a specific wavelength of the light beam 304 such that at a respective filter 302, a respective decoupled light beam 305 can be provided. Whereby, each filter 302 reflects the not decoupled parts of the light beam 304 to the next reflecting surface 301, which in turn reflects the light beam 304 to the next filter 302 until the light beam 304 is completely decoupled.

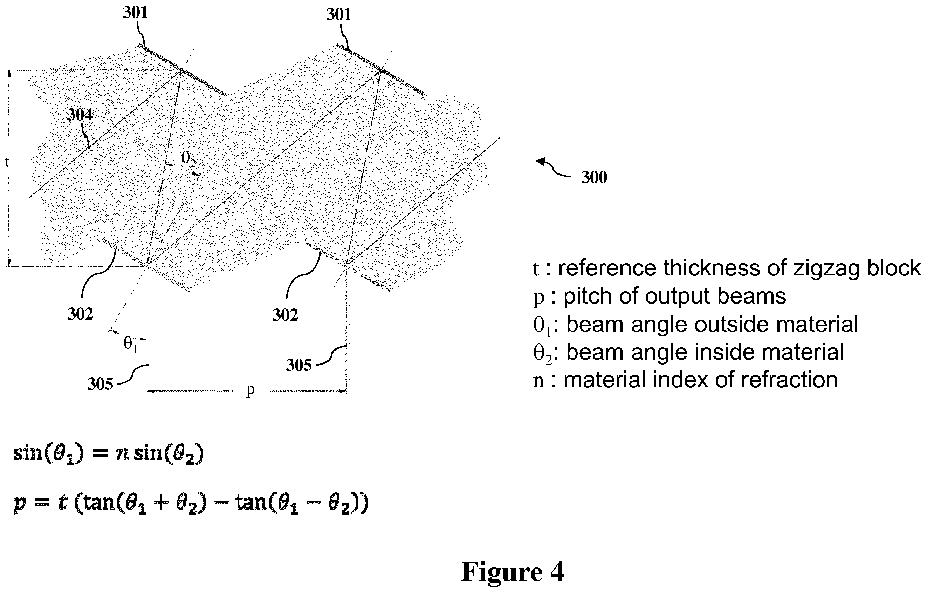

As illustrated in **FIG. 4,** the reflecting surfaces 301 and the filters 302 are arranged in such a way that due to the refraction effect according to the Snell's law, the decoupled light beams 305 can be decoupled perpendicular to a base plate of a WDM receiver/transmitter, in which the filter block 300 can be used, even if the filter block 300 is arranged parallel to a base plate of such a WDM receiver/transmitter (i.e. in case, the base plate and the longitudinal axis 303 of the filter block 300 are parallel).

In **FIG. 4,** the correlation of different characteristics of the filter block 300 and Snell's law are provided such that based on the specific filter block 300 and its material characteristics, the arrangement/inclinations of the reflecting surfaces 301 and the filters 302 and the distance p (pitch) between two consecutive decoupled beams 305 can be calculated or derived. In more complex arrangements (e.g. more than four channels and/or where the reflecting surfaces and filters should be distributed in the three-dimensional space) also numerical math models (using systems of equations), graphical software with CAD systems or other optical design software can be used to calculate the specific angles and arrangements of the reflecting surfaces and filters.

The distance p between light beams transmittable from two consecutive filters 302 is

$$ p = t \times (\tan(\theta_1 + \theta_2) - \tan(\theta_1 - \theta_2)) $$

wherein:

**p** is the distance (pitch) between two (input or output) light beams transmittable from two consecutive filters;

**t** is the distance between the i-th reflecting surface and an i-th plane including the at least one corresponding filter; in other words, t is the distance between the point at which the light beam is reflected at the respective reflecting surface and the point at which the light beam hits the respective filter;

$\theta_1$ is an angle of an emitted/received beam with respect to an axis perpendicular to the i-th plane; in other words, $\theta_1$ is an angle at the outside boundary (outside material, e.g. air) between an output/input light beam and a normal vector of the respective filter; and

$\theta_2$ is an angle of the light beam reflected by the i-th reflecting surface with respect to an axis perpendicular to the i-th plane; in other words, $\theta_2$ is an angle at the inside boundary (inside material, e.g. glass or plastic) between the light beam and a normal vector of the respective filter.

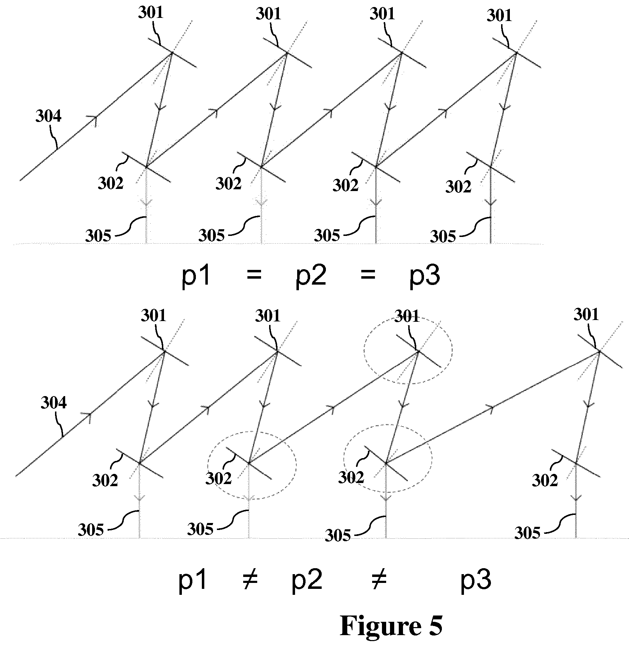

**FIG. 5** shows two arrangements of reflecting surfaces 301 and filters 302. The upper arrangement corresponds to the embodiment shown in **FIG. 3** and **FIG. 4** providing a constant distance p between the decoupled light beams 305. In the lower arrangement, different pitches p between the decoupled light beams 305 are provided. These different distances p can be provided by adjusting the spatial positions and the reflecting angles of the reflecting surfaces 301 and the filters 302, e. g. by arranging the reflecting surfaces 301 and the filters 302 more distantly and by adjusting the respective reflecting angles of the reflecting surfaces 301 and the filters 302. Thereby, it is possible to provide different pitches p between the decoupled light beams 305. The latter arrangement can be of advantage, for example, in case different optical sensors having different extents are used.

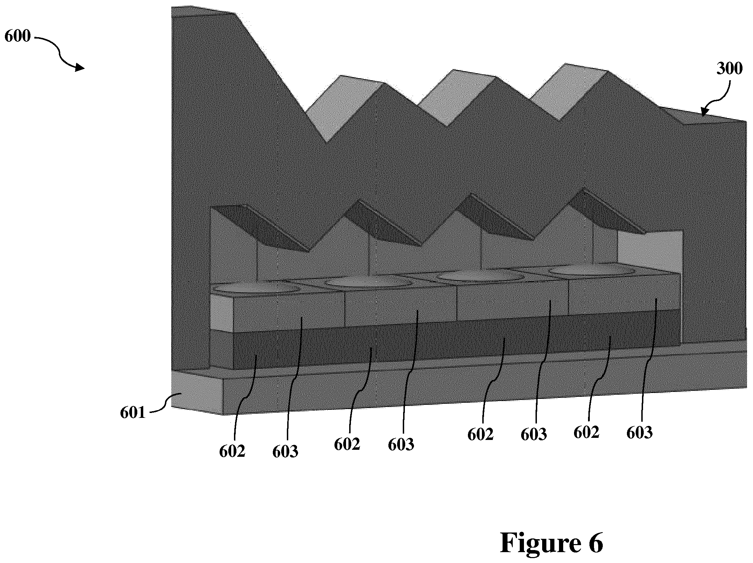

FIG. 6 shows a WDM receiver 600 comprising a filter block 300. The WDM receiver 600 further comprises a base plate 601 onto which photodiode sensors 602 are arranged in a linear arrangement corresponding to the linear arrangement of the decoupled light beams 305 provided by the filter block 300. Above the photodiode sensors 602 optional focusing lenses 603 are provided further enhancing the collection efficiency and reduce tolerance sensitivity of the WDM receiver 600. In a corresponding WDM transmitter, the photodiode sensors 602 are replaced by respective laser diodes for providing respective input beams.

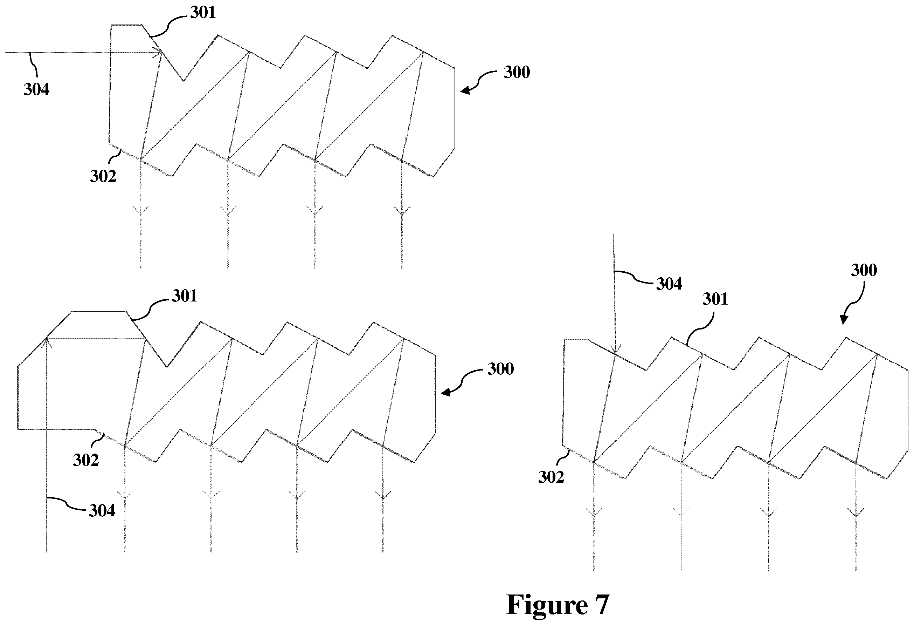

FIG. 7 shows different solutions for guiding a light beam 304 into the filter block 300, i.e. to the first reflecting surface 301 or the first filter 302. As can be taken from FIG. 7, it is possible to guide the light beam 304 to a first reflecting surface 301 or directly to a first filter 302.

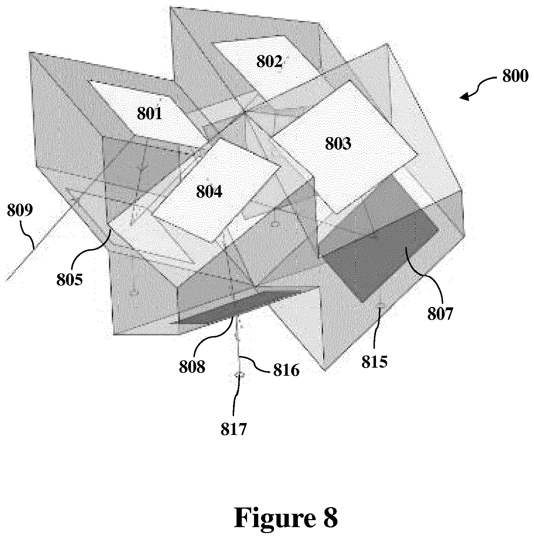

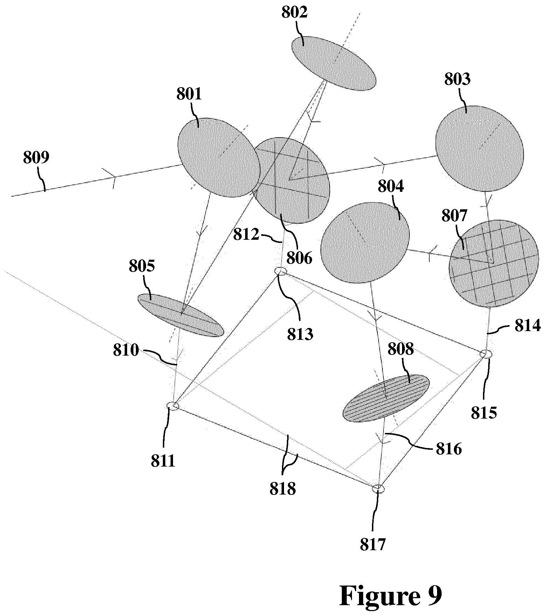

FIG. 8 shows a 4-channel filter block 800 according to a second embodiment of the invention. The filter block 800 comprises four reflecting surfaces 801 to 804 and four filters 805 to 808. In FIG. 9, the arrangement of the reflecting surfaces 801 to 804, the filters 805 to 808 and the path of the light beam 809 is illustrated in more detail.

As can be taken from FIG. 8 and FIG. 9, a light beam 809 is directed to a first reflecting surface 801, which reflects the light beam 809 to a first filter 805, where a first output light beam 810 can be provided to a first photodiode sensor 811. The first filter 805 reflects the non-decoupled part of the light beam 809 to a second reflecting surface 802 by which the light beam 809 is directed to a second filter 806, where a second output beam 812 can be provided to a second photodiode sensor 813. The non-decoupled part of the light beam 809 is reflected by the second filter 806 to a third reflecting surface 803 by which the light beam 809 is directed to a third filter 807, where a third output beam 814 can be provided to a third photodiode sensor 815. The non-decoupled part of the light beam 809 is reflected by the third filter 807 to a fourth reflecting surface 804 by which the light beam 809 is directed to a fourth filter 808, where a fourth output beam 816 can be provided to a fourth photodiode sensor 817.

In top view, the reflecting surfaces 801 to 804 and the filters 805 to 808 are arranged in two square arrays, which are indicated by the projection lines 818 in FIG. 9.

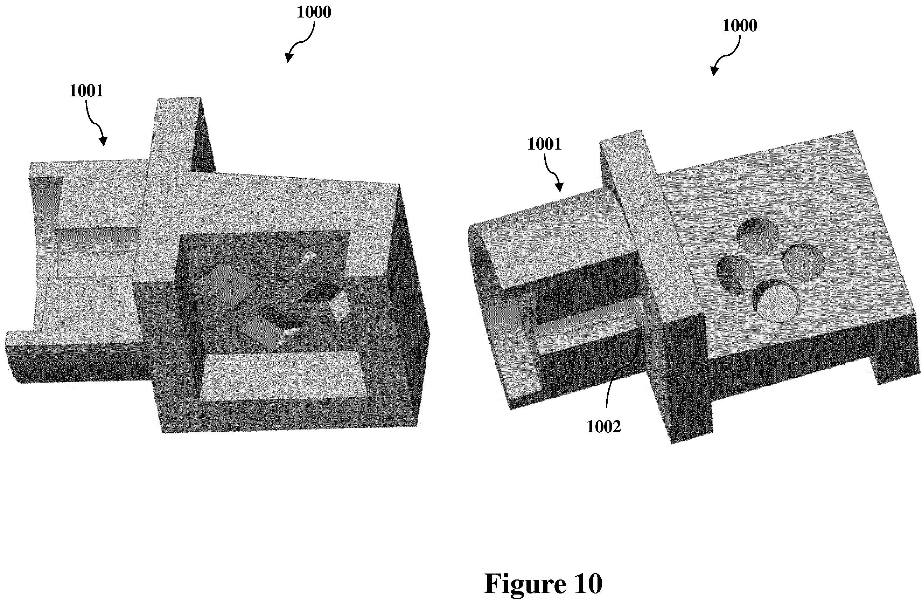

FIG. 10 shows a filter block 1000, which is a variation of the filter block 800 shown in FIG. 8. The filter block 1000 further comprising a fiber optic receptacle 1001 configured to receive the end of a fiber optic cable (not shown) and a collimating lens 1002 optically aligned with the fiber optic receptacle 1001 and configured to guide a light beam from the fiber optic cable into the filter block 1000. In the shown embodiment, the filter block 1000 comprising the fiber optic receptacle 1001 and the collimating lens 1002 is provided as an integral part, preferably formed by means of plastic molding, wherein the filters are preferably applied by means of coating.

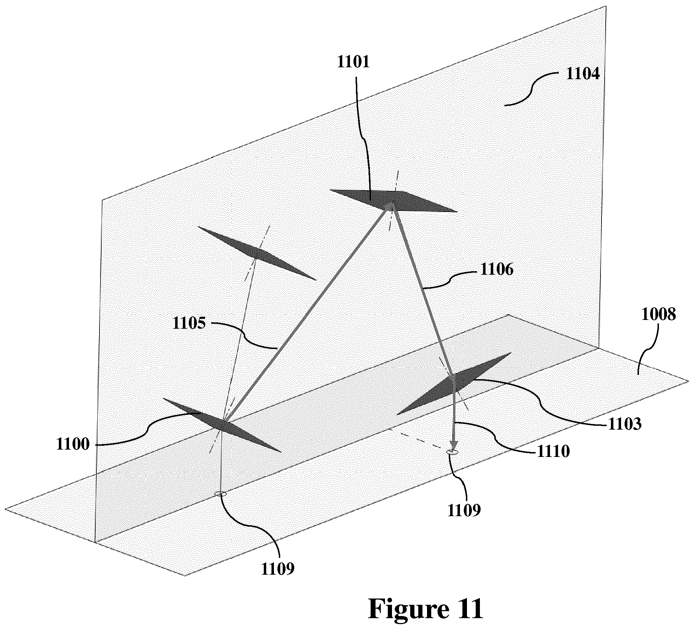

FIG. 11 shows a light beam guided between a first filter 1100, a first reflecting surface 1101 and a second filter 1103. By FIG. 11, the relation between the reflecting surfaces and the filters should be illustrated in more detail.

As can be seen in Fig. 11, the normal vector of the filter 1100 is laying on the vertical plane 1104; the light beam 1105 is laying on the same vertical plane, while the normal vector of mirror 1101 can be tilted with respect to the vertical plane, thus causing the reflected beam 1106 to lay outside the vertical plane.

Alternatively, the normal vector of the first filter 1100 may be tilded with respect to the vertical plane 1104. From the first filter 1100, a first ray 1105 of the light beam is reflected to the first reflecting surface 1101 such that the point where the first ray 1105 hits the first reflecting surface 1101 is not within the vertical plane 1104. A first relation is provided by this reflection relation, which is valid on a plane that contains the first ray 1105 and the normal vector of the first reflecting surface 1101. As a result, the orientation of a second ray 1106, which is reflected from the first reflecting surface 1101, can be derived as a function of the tilt angles of the first reflecting surface 1101 and the plane containing the first ray 1105. A second relation is provided by the refraction according to Snell's law at the second filter 1103.

For each optical sensor 1107 laying in a horizontal plane 1108, these two relations are valid, together with the boundary conditions, like the desired position of the optical sensors 1109 on the horizontal plane 1008, and the perpendicularity between a third ray 1110 and the horizontal plane 1008. The resulting system can be solved and an optimal solution for the arrangement of the reflecting surfaces and filters can be obtained. Extending the system of relations for all the subsequent reflections and refractions, a solution for arbitrary optical sensor positioning can be obtained. In more complex arrangements (e.g. more than four channels) also numerical math models (using systems of equations), graphical software with CAD systems or other optical design software can be used to calculate the specific angles and arrangements of the reflecting surfaces and filters.

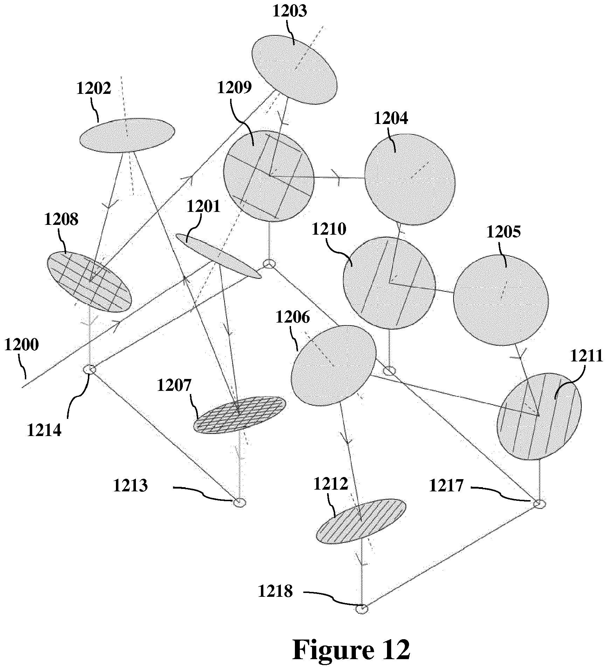

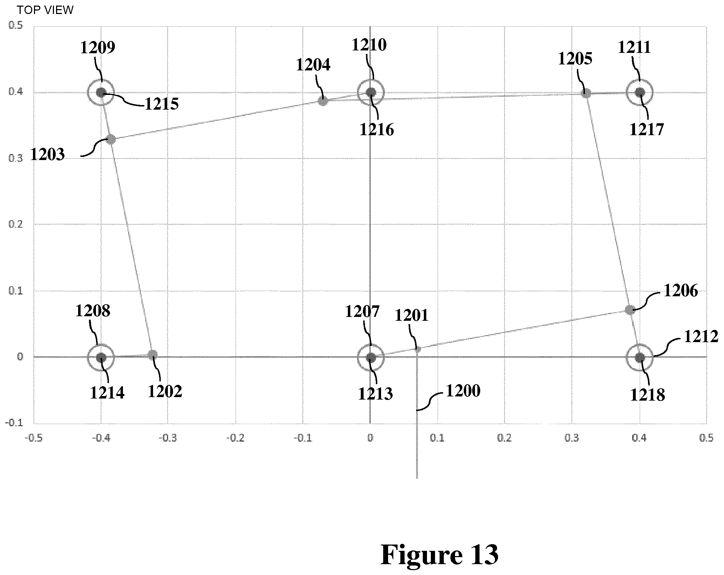

FIG. 12 and FIG. 13 show the path of a light beam 1200 in a WDM multiplexer comprising 6 channels with six reflecting surfaces 1201 to 1206 and six filters 1207 to 1212 arranged in two rectangular arrays, respectively. FIG. 12 is a top view, illustrating the arrangement of the reflecting surfaces 1201 to 1206 and filters 1207 to 1212. Also here, the light beam 1200 is guided to a first reflecting surface 1201 directing the light beam 1200 to a first filter 1207, where a first output light beam can be provided to a first photodiode sensor 1213. The first filter 1207 reflects the non-decoupled part of the light beam 1200 to a second reflecting surface 1208 by which the light beam 1200 is directed to a second filter 1208, where a second output beam can be provided to a second photodiode sensor 1214. As explained with respect to **FIG. 8** and **FIG. 9,** in this manner, the light beam 1200 is guided in a zigzag path between the reflecting surfaces 1201 to 1206 and the filters 1207 to 1212 providing respective output light beams to the optical sensors 1213 to 1218.

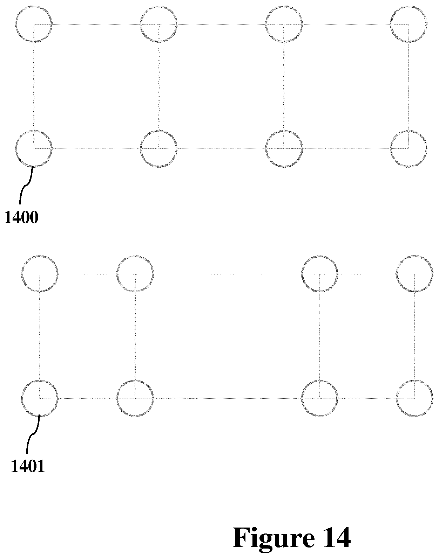

**FIG. 14** shows two arrangements of the optical sensors or laser diodes arranged at the base plate of a WDM receiver/transmitter. As can be taken from the upper arrangement shown in **FIG. 14,** the optical sensors or laser diodes 1400 can be arranged regularly on the base plate that means, the rows and lines of the shown array are equally distributed. In the lower arrangement, the optical sensor or laser diodes 1401 are irregularly distributed that means, the distances between at least two lines or between to rows of optical sensor or laser diodes 1401 are different.

The present invention has been described in conjunction with various embodiments as examples as well as implementations. However, other variations can be understood and effected by those persons skilled in the art and practicing the claimed invention, from the studies of the drawings, this disclosure and the independent claims. In the claims as well as in the description the word "comprising" does not exclude other elements or steps and the indefinite article "a" or "an" does not exclude a plurality. A single element or other unit may fulfill the functions of several entities or items recited in the claims. The mere fact that certain measures are recited in the mutual different dependent claims does not indicate that a combination of these measures cannot be used in an advantageous implementation.

**Claims**

1. A filter block (800, 1000) for an optical N-channels multiplexing/demultiplexing device (600) for receiving or emitting light, wherein the filter block (800) comprises:

    a plurality of N reflecting surfaces (801-804, 1201-1206) and a plurality of N filters (805-808, 1207-1212), wherein each reflecting surface (801-804, 1201-1206) is associated to a corresponding filter (805-808, 1207-1212) so as to reflect a light beam (809, 1100, 1200) to said associated filter (805-808, 1207-1212), wherein the plurality of N reflecting surfaces (801-804, 1201-1206) and the plurality of N filters (805-808, 1207-1212) are arranged such that a light beam is guided in a zigzag path between the plurality of N reflecting surfaces (801-804, 1201-1206) and the plurality of N filters (805-808, 1207-1212), and wherein each of said N filters (805-808, 1207-1212) is transparent to a defined wavelength of the light beam and reflective for the rest of the light beam,

    wherein the plurality of N reflecting surfaces (801-804, 1201-1206) are arranged in a two-dimensional array and the plurality of N filters (805-808, 1207-1212) are oppositely arranged in a two-dimensional array, wherein the reflecting surfaces (801-804, 1201-1206) have respective normal vectors that are not parallel to each other, and the filters (805-808, 1207-1212) have respective normal vectors that are not parallel to each other, and
    wherein the plurality of N reflecting surfaces (801-804, 1201-1206) and the plurality of N filters (805-808, 1207-1212) are arranged such that output light beams are provided which are perpendicular to a base plate of the optical N-channels multiplexing/demultiplexing device.

2. Filter block (800, 1000) according to claim 1, wherein the reflecting surfaces (801-804, 1201-1206) are arranged independently from each other in a three-dimensional space and the N filters (805-808, 1207-1212) are arranged independently from each other in the three-dimensional space.

3. Filter block (800, 1000) according to one of the preceding claims, wherein
the distance (p) between light beams (810, 8012, 814, 816, 1110) transmittable from two consecutive filters (805-808, 1207-1212) is

$$p = t \times (\tan(\theta_1 + \theta_2) - \tan(\theta_1 - \theta_2))$$

wherein

    **p** is the distance between two light beams transmittable from two consecutive filters;
    **t** is the distance between the i-th reflecting surface and an i-th plane including the at least one corresponding filter;
    $\theta_1$ is an angle of an emitted/received beam with respect to an axis perpendicular to the i-th plane; and
    $\theta_2$ is an angle of the light beam reflected by the i-th reflecting surface with respect to an axis perpendicular to the i-th plane.

4. An optical wavelength division multiplexing/demultiplexing device (600), comprising:

    at least one filter block (300, 800, 1000) according to one of the claims 1 to 3;
    a base plate (601) on which optical sensors (602, 811, 813, 815, 123-1218) or laser diodes are arranged; wherein

the at least two reflecting surfaces (301, 801-804, 1201-1206) and the at least two filters (302, 805-808, 1207-1212) are such arranged that the light beams (305, 810, 8012, 814, 816, 1110) transmittable through the at least two filters (302, 805-808, 1207-1212) are parallel to a normal vector of the base plane (601).

5. Device (600) according to claim 4, wherein between the at least two filters (302, 805-808, 1207-1212) and the optical sensors (602, 811, 813, 815, 123-1218) or laser diodes no optical elements are arranged, in particular no prisms or wedges.

6. Device (600) according to one of the claims 4 or 5, wherein the optical sensors (602, 811, 813, 815, 123-1218) comprise a respective focusing lens (603) for focusing a transmitted light beam (602, 811, 813, 815, 123-1218).

7. Device (600) according to one of the claims 4 to 6, wherein the optical sensors (602, 811, 813, 815, 123-1218) or laser diodes on the base plate (601) are arranged in form of a linear or two-dimensional array.

8. Device (600) according to one of the claims 4 to 7, wherein the optical sensors (602, 811, 813, 815, 123-1218) or laser diodes are regularly distributed on the base plate (601).

9. Device (600) according to one of the claims 4 to 7, wherein the optical sensors (602, 811, 813, 815, 123-1218) or laser diodes are irregularly distributed on the base plate (601).

**Patentansprüche**

1. Filterblock (800, 1000) für eine optische N-Kanal-Multiplex-/Demultiplex-Vorrichtung (600) zum Empfangen oder Aussenden von Licht, wobei der Filterblock (800) umfasst:

eine Vielzahl von N reflektierenden Flächen (801-804, 1201-1206) und eine Vielzahl von N Filtern (805-808, 1207-1212), wobei jede reflektierende Fläche (801-804, 1201-1206) mit einem entsprechenden Filter (805-808, 1207-1212) verknüpft ist, um einen Lichtstrahl (809, 1100, 1200) zu dem verknüpften Filter (805-808, 1207-1212) zu reflektieren, wobei die Vielzahl von N reflektierenden Flächen (801-804, 1201-1206) und die Vielzahl von N Filtern (805-808, 1207-1212) so angeordnet sind, dass ein Lichtstrahl in einem Zickzack-Weg zwischen der Vielzahl von N reflektierenden Flächen (801-804, 1201-1206) und der Vielzahl von N Filtern (805-808, 1207-1212) geführt wird, und wobei jedes der N Filter (805-808, 1207-1212) für eine definierte Wellenlänge des Lichtstrahls transparent und für den Rest des Lichtstrahls reflektierend ist, wobei die Vielzahl von N reflektierenden Flächen (801-804, 1201-1206) in einem zweidimensionalen Feld angeordnet sind und die Vielzahl von N Filtern (805-808, 1207-1212) gegenüberliegend in einem zweidimensionalen Feld angeordnet sind, wobei die reflektierenden Flächen (801-804, 1201-1206) jeweilige Normalvektoren aufweisen, die nicht parallel zueinander sind, und die Filter (805-808, 1207-1212) jeweilige Normalvektoren aufweisen, die nicht parallel zueinander sind, und wobei die Vielzahl von N reflektierenden Flächen (801-804, 1201-1206) und die Vielzahl von N Filtern (805-808, 1207-1212) so angeordnet sind, dass Ausgangslichtstrahlen bereitgestellt werden, die rechtwinklig zu einer Basisplatte der optischen N-Kanal-Multiplex-/Demultiplex-Vorrichtung sind.

2. Filterblock (800, 1000) gemäß Anspruch 1, wobei die reflektierenden Flächen (801-804, 1201-1206) unabhängig voneinander in einem dreidimensionalen Raum angeordnet sind und die N Filter (805-808, 1207-1212) unabhängig voneinander in dem dreidimensionalen Raum angeordnet sind.

3. Filterblock (800, 1000) gemäß einem der vorhergehenden Ansprüche, wobei die Entfernung (p) zwischen Lichtstrahlen (810, 8012, 814, 816, 1110), die aus zwei aufeinanderfolgenden Filtern (805-808, 1207-1212) übertragbar sind,

$$p = t \times (tan(\theta_1 + \theta_2) - tan(\theta_1 - \theta_2))$$

ist, wobei
**p** die Entfernung zwischen zwei Lichtstrahlen ist, die aus zwei aufeinanderfolgenden Filtern übertragbar sind;
**t** die Entfernung zwischen der i-ten reflektierenden Fläche und einer i-ten Ebene ist, die das mindestens eine entsprechende Filter enthält;
$\theta_1$ ein Winkel eines ausgesendeten/empfangenen Strahls in Bezug auf eine zur i-ten Ebene rechtwinklige Achse ist; und
$\theta_2$ ein Winkel des durch die i-te reflektierende Fläche reflektierten Lichtstrahls in Bezug auf eine zur i-ten Ebene rechtwinklige Achse ist.

4. Optische Wellenlängen-Multiplex-/Demultiplex-Vorrichtung (600), umfassend:

mindestens einen Filterblock (300, 800, 1000) gemäß einem der Ansprüche 1 bis 3; eine Basisplatte (601), auf der optische Sensoren (602, 811, 813, 815, 123-1218) oder Laserdioden angeordnet sind; wobei

die mindestens zwei reflektierenden Flächen (301, 801-804, 1201-1206) und die mindestens zwei Filter (302, 805-808, 1207-1212) so angeordnet sind, dass die Lichtstrahlen (305, 810, 8012, 814, 816, 1110), die durch die mindestens zwei Filter (302, 805-808, 1207-1212) übertragbar sind, parallel zu einem Normalvektor der Basisebene (601) sind.

5. Vorrichtung (600) gemäß Anspruch 4, wobei zwischen den mindestens zwei Filtern (302, 805-808, 1207-1212) und den optischen Sensoren (602, 811, 813, 815, 123-1218) oder Laserdioden keine optischen Elemente, insbesondere keine Prismen oder Keile, angeordnet sind.

6. Vorrichtung (600) gemäß einem der Ansprüche 4 oder 5, wobei die optischen Sensoren (602, 811, 813, 815, 123-1218) jeweils eine Fokussierlinse (603) zum Fokussieren eines übertragenen Lichtstrahls (602, 811, 813, 815, 123-1218) umfassen.

7. Vorrichtung (600) gemäß einem der Ansprüche 4 bis 6, wobei die optischen Sensoren (602, 811, 813, 815, 123-1218) oder Laserdioden auf der Basisplatte (601) in Form eines linearen oder zweidimensionalen Feldes angeordnet sind.

8. Vorrichtung (600) gemäß einem der Ansprüche 4 bis 7, wobei die optischen Sensoren (602, 811, 813, 815, 123-1218) oder Laserdioden regelmäßig auf der Basisplatte (601) verteilt sind.

9. Vorrichtung (600) gemäß einem der Ansprüche 4 bis 7, wobei die optischen Sensoren (602, 811, 813, 815, 123-1218) oder Laserdioden unregelmäßig auf der Basisplatte (601) verteilt sind.

**Revendications**

1. Bloc filtrant (800, 1000) pour un dispositif optique de multiplexage/démultiplexage à N canaux (600) destiné à recevoir ou émettre de la lumière, le bloc filtrant (800) comprenant :

une pluralité de N surfaces réfléchissantes (801-804, 1201-1206) et une pluralité de N filtres (805-808, 1207-1212), chaque surface réfléchissante (801-804, 1201-1206) étant associée à un filtre correspondant (805-808, 1207-1212) de manière à réfléchir un faisceau lumineux (809, 1100, 1200) jusqu'audit filtre associé (805-808, 1207-1212), la pluralité de N surfaces réfléchissantes (801-804, 1201-1206) et la pluralité de N filtres (805-808, 1207-1212) étant disposés de telle sorte qu'un faisceau lumineux est guidé sur une trajectoire en zigzag entre la pluralité de N surfaces réfléchissantes (801-804, 1201-1206) et la pluralité de N filtres (805-808, 1207-1212), et chacun desdits N filtres (805-808, 1207-1212) étant transparent pour une longueur d'onde définie du faisceau lumineux et réfléchissant pour le reste du faisceau lumineux,

dans lequel la pluralité de N surfaces réfléchissantes (801-804, 1201-1206) sont disposées dans un réseau bidimensionnel et la pluralité de N filtres (805-808, 1207-1212) sont réciproquement disposés dans un réseau bidimensionnel, les surfaces réfléchissantes (801-804, 1201-1206) ayant des vecteurs normaux respectifs qui ne sont pas parallèles les uns aux autres, et les filtres (805-808, 1207-1212) ayant des vecteurs normaux respectifs qui ne sont pas parallèles les uns aux autres, et

dans lequel la pluralité de N surfaces réfléchissantes (801-804, 1201-1206) et la pluralité de N filtres (805-808, 1207-1212) sont disposés de telle sorte que sont délivrés des faisceaux lumineux de sortie qui sont perpendiculaires à une plaque de base du dispositif optique de multiplexage/démultiplexage à N canaux.

2. Bloc filtrant (800, 1000) selon la revendication 1, dans lequel les surfaces réfléchissantes (801-804, 1201-1206) sont disposées indépendamment les unes des autres dans un espace tridimensionnel et les N filtres (805-808, 1207-1212) sont disposés indépendamment les uns des autres dans l'espace tridimensionnel.

3. Bloc filtrant (800, 1000) selon une des revendications précédentes, dans lequel la distance (p) entre des faisceaux lumineux (810, 8012, 814, 816, 1110) transmissibles depuis deux filtres consécutifs (805-808, 1207-1212) est

$$p = t \times (\tan(\theta_1 + \theta_2) - \tan(\theta_1 - \theta_2))$$

dans lequel

**p** est la distance entre deux faisceaux lumineux transmissibles depuis deux filtres consécutifs ;

**t** est la distance entre la $i^{\text{ème}}$ surface réfléchissante et un $i^{\text{ème}}$ plan comportant l'au moins un filtre correspondant ;

$\theta_1$ est un angle d'un faisceau émis/reçu par rapport à un axe perpendiculaire au $i^{\text{ème}}$ plan ; et

$\theta_2$ est un angle du faisceau lumineux réfléchi par la $i^{\text{ème}}$ surface réfléchissante par rapport à un axe per-

pendiculaire au $i^{ème}$ plan.

4. Dispositif optique de multiplexage/démultiplexage par répartition en longueur d'onde (600), comprenant :

   au moins un bloc filtrant (300, 800, 1000) selon une des revendications 1 à 3 ; une plaque de base (601) sur laquelle sont disposés des capteurs optiques (602, 811, 813, 815, 123-1218) ou des diodes laser ; dans lequel les au moins deux surfaces réfléchissantes (301, 801-804, 1201-1206) et les au moins deux filtres (302, 805-808, 1207-1212) sont disposés de telle sorte que les faisceaux lumineux (305, 810, 8012, 814, 816, 1110) transmissibles à travers les au moins deux filtres (302, 805-808, 1207-1212) sont parallèles à un vecteur normal du plan de base (601).

5. Dispositif (600) selon la revendication 4, dans lequel entre les au moins deux filtres (302, 805-808, 1207-1212) et les capteurs optiques (602, 811, 813, 815, 123-1218) ou les diodes laser, aucun élément optique n'est disposé, en particulier aucun prisme ni coin.

6. Dispositif (600) selon une des revendications 4 et 5, dans lequel les capteurs optiques (602, 811, 813, 815, 123-1218) comprennent une lentille de focalisation respective (603) pour focaliser un faisceau lumineux transmis (602, 811, 813, 815, 123-1218).

7. Dispositif (600) selon une des revendications 4 à 6, dans lequel les capteurs optiques (602, 811, 813, 815, 123-1218) ou les diodes laser sur la plaque de base (601) sont disposés sous la forme d'un réseau linéaire ou bidimensionnel.

8. Dispositif (600) selon une des revendications 4 à 7, dans lequel les capteurs optiques (602, 811, 813, 815, 123-1218) ou les diodes laser sont répartis régulièrement sur la plaque de base (601).

9. Dispositif (600) selon une des revendications 4 à 7, dans lequel les capteurs optiques (602, 811, 813, 815, 123-1218) ou les diodes laser sont répartis irrégulièrement sur la plaque de base (601).

Figure 1

EP 3 422 615 B1

**Figure 2**

EP 3 422 615 B1

**Figure 3**

EP 3 422 615 B1

t : reference thickness of zigzag block
p : pitch of output beams
$\theta_1$: beam angle outside material
$\theta_2$: beam angle inside material
n : material index of refraction

$$\sin(\theta_1) = n \sin(\theta_2)$$

$$p = t \left(\tan(\theta_1 + \theta_2) - \tan(\theta_1 - \theta_2)\right)$$

**Figure 4**

EP 3 422 615 B1

p1 = p2 = p3

p1 ≠ p2 ≠ p3

**Figure 5**

EP 3 422 615 B1

Figure 6

**Figure 7**

EP 3 422 615 B1

**Figure 8**

EP 3 422 615 B1

Figure 9

**Figure 10**

EP 3 422 615 B1

**Figure 11**

**Figure 12**

EP 3 422 615 B1

Figure 13

EP 3 422 615 B1

**Figure 14**

1400

1401

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2013343699 A1
- US 9485046 B1
- US 2002057868 A1
- US 2002131180 A1